# EUROPEAN PATENT SPECIFICATION

(11) **EP 3 243 683 B1**
(45) Date of publication and mention of the grant of the patent: **06.01.2021**
(21) Application number: 16811564.0
(22) Date of filing: 10.06.2016
(51) Int. Cl.: B60K 17/348, B60K 23/08, F16D 48/06

(54) **CONTROL SYSTEM FOR VEHICLE**
STEUERUNGSSYSTEM FÜR FAHRZEUG
SYSTÈME DE COMMANDE POUR VÉHICULE

(30) Priority: 19.06.2015 JP 2015123635
(43) Date of publication of application: 15.11.2017
(73) Proprietor: Mitsubishi Jidosha Kogyo Kabushiki Kaisha, Tokyo 108-8410 (JP)
(72) Inventor: NISHIZAWA, Hideo, Tokyo 108-8410 (JP); MATSUO, Shunsuke, Tokyo 108-8410 (JP)
(74) Representative: Regimbeau
(86) International application number: PCT/JP2016/067368
(87) International publication number: WO 2016/204090

(56) References cited:
- JP-A- 2002 349 604
- JP-A- 2002 349 604
- JP-A- 2004 225 844
- JP-A- 2004 225 844
- JP-A- 2004 359 132
- JP-A- 2005 083 464
- JP-A- 2005 083 464
- JP-A- 2012 061 923
- JP-A- 2012 061 923

## Description

### Technical Field

The present invention relates to a control apparatus for a vehicle including first drive wheels connected to a power source, and second drive wheels connected to the power source via a clutch.

### Background Art

See documents JP 2005 083464, JP 2002 349604, JP 2004 225844 and JP 2012 061923.

Conventionally, as vehicles capable of switching a drive mode between a two-wheel drive and a four-wheel drive, those having a coupling clutch interposed between a power source and drive wheels are well known. Coupling clutches are one type of fluid couplings each having one or more pairs of clutch plates (impellers) enclosed within a casing filled with viscous fluid. The magnitude of torque transmitted via the coupling clutch can be varied by controlling the flow quantity or the pressure of the viscous fluid. Alternatively, when electromagnetic clutch plates are used, the magnitude of transmitted torque can be controlled by controlling the friction engagement force of each clutch plate (refer to Patent Document 1).

Recently, coupling clutches have been developed which contain an urging device for engaging or disengaging the clutch plates in an active manner. For example, coupling clutches of a ball cam structure are known which include balls interposed between a pair of cams, and the distance between the cams is changed by varying the contact positions of the balls and the respective cams in accordance with a phase difference between the cams. One of the cams is made movable by actuating an actuator in the direction so as to contact or separate from a torque input-side member. When the one of the cams made to couple to the torque input-side member and to rotate together, a phase difference arises between the cams and the other cam moves in the direction so as to separate from the one cam. At this time, the clutch plates are pressed by the other cam and the clutch plates are urged to the direction so as to engage with each other, thereby controlling the magnitude of torque to be transmitted (refer to Patent Document 2).

### Related Art Document

### Patent Document

Patent Document 1: Japanese Laid-open Patent Publication No. 2004-090702
Patent Document 2: Japanese Laid-open Patent Publication No. 2011-163399

### Summary of Invention

### Problem to be Solved by Invention

In a coupling clutch as described above, an actuator, the friction engagement force, the flow quantity and the pressure of fluid, and the like, are controlled such that the magnitude of transmitted torque is reduced in a driving state in which no driving power is required to be transmitted. For example, when a vehicle in the four-wheel drive mode stops while it drives to wait for a traffic signal, a control to temporarily stop the actuator may be carried out. Because this control reduces the viscous resistance between the clutch plates and the fluid, however, slide rotations readily occur between the input-side and the output-side of the coupling clutch, which may reduce the start performance of the vehicle.

In addition, in a coupling clutch with a ball cam structure, cams rotate relative to each other simultaneously when the cams are disengaged, and the phase difference may be eliminated. Accordingly, once a coupling between one of the cams and a torque input-side member is released, the cams cannot be engaged once again until a phase difference arises between the cams even if the coupling state is restored immediately after the disengagement. This makes slide rotations readily occur between the input-side and the output-side of the coupling clutch, which may reduce the start performance of the vehicle.

The present disclosure was conceived of in light of the above issues, and one object thereof is to provide a control apparatus for a vehicle which can improve the start performance. Not limited to that object, provision of effects and advantages that are obtained in each configuration shown in the "Mode for Carrying out the Invention" described below and that cannot be achieved with conventional techniques are also regarded as other objects of the present disclosure.

### Solutions to Problem

(1) A control apparatus for a vehicle disclosed therein includes a power source of the vehicle, first drive wheels that are connected to the power source, and are to be driven by the power source, and a clutch interposed on a transmission path of driving power generated by the power source. The control apparatus also includes second drive wheels that are connected to the power source via the clutch, and are capable of being driven by the power source, and an urging device that urges the clutch to an engagement direction in accordance to a difference between a rotation speed upstream to the clutch and a rotation speed downstream to the clutch. The control apparatus further includes a controlling device that maintains, when the clutch has been urged to the engagement direction by the urging device before the vehicle stops, an urging state by the urging device during the stoppage, since before the stoppage.
   Preferably, the controlling device maintains the urging state during the stoppage if the clutch has transmitted the driving power to the second drive wheels before the stoppage. Specifically, the controlling device preferably maintains the urging state during the stoppage if the clutch has been engaged before the stoppage.
   In contrast, the urging state is preferably eliminated during the stoppage if the clutch has not transmitted the driving power to the second drive wheels before the stoppage. Specifically, the urging state is preferably eliminated during the stoppage if the clutch has not been engaged before the stoppage.
(2) Preferably, the controlling device intensifies the urging state by the urging device during the stoppage so as to be greater than the urging state by the urging device before the stoppage.
(3) Preferably, the urging device has a ball cam structure including a first cam to which the driving power is input, a second cam that is disposed opposing to the first cam, having a ball interposed therebetween, to press the clutch to an engagement direction in accordance with a phase difference with the first cam, and a control clutch that fixes the first cam on an upstream of the clutch on the transmission path.
   Note that the controlling device preferably maintains the phase difference between the first cam and the second cam during the stoppage if the second drive wheels has been driven by the power source before the stoppage.
   Specifically, the urging device is preferably maintained to the urging state during the stoppage to keep the clutch in the engaged state if the clutch has been in the engaged state before the stoppage. In this case, the phase difference may retained to that value, or the phase difference may be increased. If the driving power has been transmitted to the second drive wheels before the stoppage, a phase difference arises.
(4) Preferably, an outer air temperature detecting device that detects an outer air temperature of the vehicle is provided. In this case, the controlling device preferably controls the urging state by the urging device during the stoppage to raise a ratio of a driving power to be transmitted from the power source to the second drive wheels as the outer air temperature detected by the outer air temperature detecting device decreases.
   For example, the engagement force of the control clutch during the stoppage is preferably increased as the outer air temperature drops.
(5) Preferably, a coefficient of friction obtaining device that obtains a coefficient of friction of a road surface on which the vehicle drives is provided. In this case, the controlling device preferably controls the urging state by the urging device during the stoppage to raise the ratio of the driving power to be transmitted from the power source to the second drive wheels as the coefficient of friction obtained by the coefficient of friction obtaining device decreases.
   For example, the engagement force of the control clutch during the stoppage is preferably is increased as the coefficient of friction decreases.
(6) Preferably, a road surface gradient detecting device that detects a gradient of a road surface on which the vehicle drives is provided. In this case, the controlling device preferably controls the urging state by the urging device during the stoppage to raise the ratio of the driving power to be transmitted from the power source to the second drive wheels as an absolute value of the gradient detected by the road surface gradient detecting device increases.
   For example, the engagement force of the control clutch during the stoppage is preferably is increased as the absolute value of the gradient increases.
(7) Preferably, a mode switching device is provided that switches the drive mode of the vehicle between a two-wheel drive mode in which the vehicle is driven only with the first drive wheels, and a four-wheel drive mode in which the vehicle is driven with both the first drive wheels and the second drive wheels. In this case, the controlling device preferably maintains, when the drive mode of the vehicle is switched from the four-wheel drive mode to the two-wheel drive mode during the stoppage, the urging state by the urging device until the vehicle starts.

### Advantageous Effects of Invention

If a clutch has been urged in the engagement direction before a vehicle stops, by maintaining an urging state during the stoppage since before the stoppage, it is possible to keep the clutch to be engaged before a start, and the start performance of the vehicle can be improved.

### Brief Description of Drawings

FIG. 1 is a diagram illustrating a configuration of a vehicle to which a control apparatus as an embodiment is applied;
FIG. 2 is a cross-sectional view illustrating a coupling clutch containing a ball cam structure;
FIG. 3 is a schematic perspective view of the ball cam structure;
FIGS. 4(A)and 4(B) are cross-sectional views (cross-sectional views along A-A in FIG. 3) for depicting operations of the ball cam structure, wherein FIG. 4 (A) shows a released state and FIG. 4(B) shows a differential state;
FIG. 5 is a flowchart exemplifying details of a control carried out by the control apparatus;
FIGS. 6(A) to 6(D) are graphs for depicting effects of the control by the control apparatus upon a start, wherein FIG. 6(A) shows accelerator openings and brake pressures, FIG. 6(B) shows vehicle speeds, FIG. 6(C) shows speed differences between front and rear wheels, FIG. 6(D) shows torques when a retention control is carried out, and FIG. 6 (E) shows torques when no retention control is carried out.

### Mode for Carrying out the Invention

A control apparatus for a vehicle (control system) as an embodiment will be described with reference to the drawings. Note that the embodiment described below is merely exemplary, and it is not intended to exclude a wide variety of modifications and applications of techniques that are not explicitly described in the following embodiment. Elements in the present embodiment may be practiced in a wide variety of modifications without departing from the gist thereof. In addition, such elements may be selectably omitted where required, or may be suitably combined.

### [1. Vehicle]

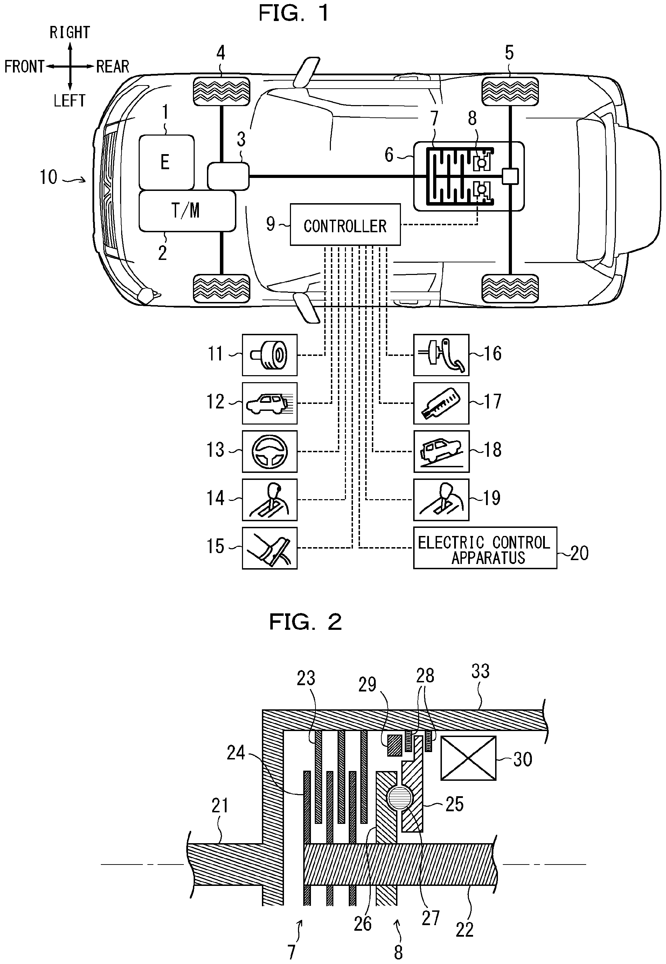

A vehicle 10 shown in FIG. 1 is an on-demand four-wheel drive car that is capable of switching a drive mode between a two-wheel drive and a four-wheel drive. Front wheels 4 (first drive wheels) of the vehicle 10 are connected to an engine 1 (internal combustion engine) as a power source. On the power transmission path connecting between the engine 1 and the front wheels 4, an automatic transmission 2 for controlling the reduction ratio and a transfer 3 for transmitting the driving power also to rear wheels 5 in accordance with the drive mode, are interposed. The transfer 3 contains a differential device for the front wheels 4. On the power transmission path connecting between the transfer 3 and the rear wheels 5 (second drive wheels), a coupling 6 (coupling clutch) for controlling driving power to be transmitted from the engine 1 to the rear wheels 5 are interposed.

The coupling 6 contains a wet clutch 7 that transmits the driving power via viscous fluid and a ball cam structure 8 for controlling an engaged state of the clutch 7. An engagement of the clutch 7 permits the driving power from the engine 1 to be transmitted to the rear wheels 5. In contrast, when the clutch 7 is released, no driving power is transmitted to the rear wheels 5, and substantially the two-wheel drive state (front-wheel drive state) is established. As set forth above, the front wheels 4 are connected to the engine 1 bypassing the clutch 7 (coupling 6), whereas the rear wheels 5 are connected to the engine 1 via the clutch 7. In other words, assuming that the power transmission path of the engine 1 is divided in two parts at the clutch 7 (coupling 6), the front wheels 4 are connected to a proximal side to the engine 1 relative to the clutch 7 (i.e., the side where the engine 1, the automatic transmission 2, and the transfer 3 are provided), whereas the rear wheels 5 are connected to a distal side to the engine 1 relative to the clutch 7. Note that the working state of the coupling 6 is electrically controlled by the controller 9.

The controller 9 (controlling device) is an electric device having a processor, such as a CPU (central processing unit) and an MPU (micro processing unit), and a non-volatile memory, such as a ROM (read only memory) and a RAM (random access memory), and the like, integrated thereon. As used therein, the processor is a processing device (processor) including a control unit (control circuit), a computation unit (computation circuit), a cache memory (a group of registers), and the like, for example. The ROM, the RAM, and the non-volatile memory are memory devices in which programs and working data are stored. Contents of a control to be carried out by the controller 9 is recorded in the ROM, the RAM, the non-volatile memory, or a removable medium as an application program, for example. Upon executing the program, the content of the program is extended in memory spaces in the RAM for execution by the processor.

As shown in FIG. 1, various sensors 11-19 for obtaining information for controlling the coupling 6 are connected to the controller 9. The vehicle speed sensor 11 detects and calculates a vehicle speed V, and the longitudinal acceleration sensor 12 detects and calculates a longitudinal acceleration G acted on a vehicle body. The steering angle sensor 13 obtains a steering angle θ, the shift position sensor 14 obtains a set position P of a shift lever of the automatic transmission 2, and the accelerator opening sensor 15 obtains an accelerator opening A.

The brake pressure sensor 16 obtains a brake pressure B (master cylinder pressure), and the outer air temperature sensor 17 obtains the outer air temperature C. The road surface gradient sensor 18 obtains a road surface gradient D corresponding to an inclination of the vehicle body, and the transfer position sensor 19 obtains a set position Q of a transfer lever for setting drive modes. As the drive modes of the vehicle 10 of the present embodiment, a two-wheel drive mode in which the vehicle is driven only with the front wheels 4, and a four-wheel drive mode in which the vehicle is driven with both the front wheels 4 and the rear wheels 5, are provided. Information obtained by those various sensors 11-19 is input to the controller 9.

The controller 9 is also communicatively connected to other electric control apparatuses 20 via an in-vehicle network. Examples of the electric control apparatuses 20 include an engine control apparatus, a speed change gear control apparatus, a brake control apparatus, and a vehicle body posture control apparatus. The electric control apparatuses 20 of the present embodiment include both a function as a coefficient of friction obtaining device that obtains a coefficient of friction µ of a road surface on which the vehicle 10 drives, and a function as a skid detecting device that detects skids of the front wheels 4 or the rear wheels 5. The information of the coefficient of friction µ of the road surface and the skids detected and calculated by the electric control apparatuses 20 is transmitted to the controller 9.

### [2. Coupling]

### [2-1. Clutch]

An internal structure of the coupling 6 is exemplified in FIG. 2. The clutch 7 contained in the coupling 6 has a structure in which input-side clutch plates 23 and output-side clutch plates 24, which are disk-shaped friction engagement members, are alternatingly arranged. The input-side clutch plates 23 are provided to a housing 33 connected to an input shaft 21 so as to be movable in the axial direction of the input shaft 21. The output-side clutch plates 24 are provided to an output shaft 22 arranged coaxially to the input shaft 21 so as to be movable in the axial direction of the output shaft 22. Viscous fluid is filled between the input-side clutch plates 23 and the output-side clutch plates 24.

When the input-side clutch plates 23 and the output-side clutch plates 24 are separated, a torque corresponding to a difference of the rotation speed of the input-side clutch plates 23 and the rotation speed of the output-side clutch plates 24 is transmitted via the viscous fluid. The magnitude of the transmitted torque is controllable by adjusting the flow quantity and the pressure of the viscous fluid. Without any rotation speed difference, the magnitude of transmitted torque is zero. On the other hand, when the input-side clutch plates 23 and the output-side clutch plates 24 are coupled, a torque corresponding to the pressing force acting between the input-side clutch plates 23 and the output-side clutch plates 24 is transmitted. In this case, a greater torque is transmitted as compared to the torque when the input-side clutch plates 23 and the output-side clutch plates 24 are separated. The positions in the directions to make the input-side clutch plates 23 and the output-side clutch plates 24 contact or separate from each other are controlled by the ball cam structure 8 (urging device).

### [2-2. Ball Cam Structure]

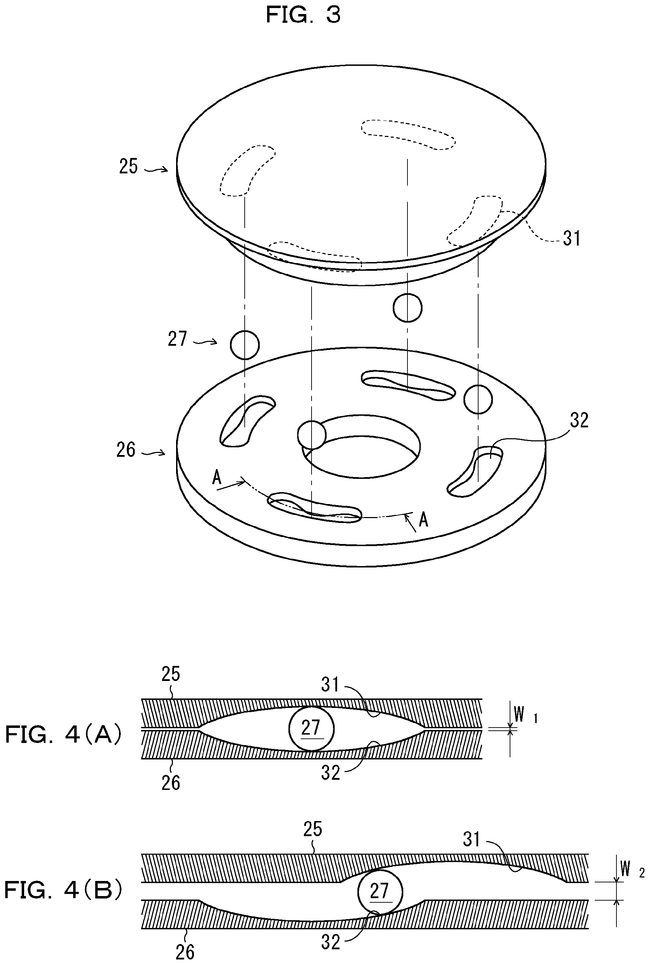

FIG. 3 is a perspective view schematically illustrating the ball cam structure 8. The pressing force acting between the input-side clutch plates 23 and the output-side clutch plates 24 is controlled by the ball cam structure 8. As shown in FIG. 2, this ball cam structure 8 is provided with a first cam 25, a second cam 26, ball members 27, and control clutches 28. An armature 29 and an electromagnetic coil 30 are also provided as mechanisms to control the working state of the control clutches 28.

The first cam 25 is a disk-shaped cam secured to the housing 33 via the control clutches 28. When the control clutches 28 are released, this first cam 25 is rotatable relative to the housing 33. Further, the second cam 26 is a disk-shaped cam disposed opposing to the first cam 25 in the axial direction of the output shaft 22, and is provided to the output shaft 22 so as to be movable in the axial direction thereof. The ball-shaped ball members 27 are provided so as to be sandwiched between the first cam 25 and the second cam 26.

As shown in FIG. 3, a plurality of first grooves 31 are formed on a surface of the first cam 25, and second grooves 32 are formed on a surface of the second cam 26 in the respective positions facing the first grooves 31. The first grooves 31 extend in the circumferential direction of the first cam 25, and are formed such that the substantially center parts of the first grooves 31 in the direction in which the first grooves 31 extend become the deepest. The second grooves 32 are similarly formed. As shown in FIGS. 4(A) and 4(B), the ball members 27 are retained within the respective first grooves 31 and second grooves 32.

As used herein, a phase difference between the first cam 25 and the second cam 26 is defined in relation to the state in which the first grooves 31 and the second grooves 32 face to each other in front. As shown in FIG. 4(A), when the first cam 25 and the second cam 26 are in the same phase, their positional relationships are such that the first grooves 31 and the second grooves 32 face to each other in front. As the phase difference between the first cam 25 and the second cam 26 increases, the first grooves 31 and the second grooves 32 are out of phase viewed from the axial direction of the output shaft 22. Note that the state in which a phase difference arises between the first cam 25 and the second cam 26, as shown in FIG. 4(B), is referred to as a "differential state".

The armature 29 is a magnetic member that presses the control clutches 28 in engagement directions when the electromagnetic coil 30 is magnetized. The control clutches 28 function to move in directions to approach to each other when they are pressed by the armature 29 to sandwich the first cam 25. The magnitude of the engagement force of the control clutches 28 corresponds to the excitation current of the electromagnetic coil 30. The excitation current of the electromagnetic coil 30 is controlled by the controller 9.

When the control clutches 28 are released, the first cam 25 and the housing 33 are separated and the first cam 25 becomes free from the members surrounding the first cam 25. As a result, as shown in FIG. 4(A), the phase difference between the first cam 25 and the second cam 26 becomes substantially zero, and the distance W₁ between the first cam 25 and the second cam becomes relative small. Because the second cam 26 and the input-side clutch plates 23 are separated in this state, the clutch 7 becomes a released state.

In contrast, once the control clutches 28 are engaged, the first cam 25 is supported on the housing 33. In this state, if a difference in the rotation speeds arises between the input shaft 21 and the output shaft 22, the phase difference between the first cam 25 and the second cam 26 is increased and the ball members 27 move to positions displaced from the center parts in the extending direction, within the respective first grooves 31 and second grooves 32. At this time, because the depths of the parts of the grooves in which the ball members 27 are positioned become smaller, the distance W₂ between the first cam 25 and the second cam becomes relative large and the second cam 26 moves in the direction so as to separate from the first cam 25.

As a result, the second cam 26 and the input-side clutch plates 23 contact (become an urging state), and the clutch 7 becomes a coupling state. As the excitation current of the electromagnetic coil 30 is increased, the first cam 25 becomes less prone to rotate relative to the housing 33, the phase difference between the first cam 25 and the second cam 26 becomes prone to increase, and the phase difference therebetween becomes less prone to reduce. As a result, as long as a difference in the rotation speeds arises between the input shaft 21 and the output shaft 22, the magnitude of driving power transmitted via the clutch 7 is adjusted in accordance with the excitation current of the electromagnetic coil 30.

As set forth above, the ball cam structure 8 functions as an urging device that urges the clutch 7 to the engagement direction in accordance with the difference between the rotation speed upstream to the clutch 7 and the rotation speed downstream to the clutch 7 when the control clutches 28 are engaged. Even when the control clutches 28 are engaged, no phase difference arises between the first cam 25 and the second cam 26 if the difference between the rotation speed upstream to the clutch 7 and the rotation speed downstream to the clutch 7 is zero. Accordingly, the second cam 26 and the input-side clutch plates 23 are separated, and the clutch 7 remains in the released state. The clutch 7 is connected only when a difference arises between the rotation speed upstream to the clutch 7 and the rotation speed downstream to the clutch 7 while the control clutches 28 are engaged. During driving in the four-wheel drive mode, however, a slight difference may arise between the rotation speed upstream to the clutch 7 and the rotation speed downstream to the clutch 7. Once such a difference in the rotation speeds arises, the phase difference between the first cam 25 and the second cam 26 is maintained unless the excitation current to the electromagnetic coil 30 is set to zero.

### [3. Controller]

The controller 9 has a function to control the excitation current of the electromagnetic coil 30 in accordance with the driving states of the vehicle 10. In the present embodiment, a retention control will be described which controls an excitation current during a stoppage in accordance with the transmission state of driving power of the clutch 7 while the vehicle drives. As used therein a retention control refers to a control to retain the phase difference that has arisen during driving between the first cam 25 and the second cam 26, after the vehicle stops.

A drive mode of a coupling 6 provided in conventional on-demand four-wheel drive cars, e.g., a drive mode to urge the clutch 7 to the engagement direction using the ball cam structure 8, is not the one in which the transmission state of driving power of the clutch 7 is controlled only in accordance with the excitation current to the electromagnetic coil 30. Rather, the control is the one in which the clutch 7 is automatically urged to the engagement direction such that the driving power is transmitted to the rear wheels 5 when a difference in the rotation speeds arises between the front wheels 4 and the rear wheels 5 (when the front wheels 4 skid) while the electromagnetic coil 30 is magnetized.

Such a drive mode is advantageous in terms of the fuel consumption and the steering performance, as compared to a drive mode in which driving power is always transmitted to the rear wheels 5. A satisfactory start performance, however, may not be obtained on a slippery road surface because the clutch 7 does not engage if there is no difference in the rotation speeds. This is because the clutch 7 cannot be engaged while the vehicle 10 stops even if the excitation current to the electromagnetic coil 30 is increased. To address the aforementioned issue, a retention control of the present embodiment controls the clutch 7 during a stoppage to be maintained to an engaged state in accordance with the transmission state of driving power of the clutch 7 since before the stoppage of the vehicle 10 (during driving of the vehicle 10), by suitably operating the ball cam structure 8 before the stoppage and during the stoppage.

A condition to initiate a retention control is in that at least following Conditions 1 and 2 are satisfied, and that preferably one of Conditions 3 and 4 is satisfied. Conditions 1-4 are determined based on information obtained by the vehicle speed sensor 11, the transfer position sensor 19, the accelerator opening sensor 15, and the brake pressure sensor 16.

### = Condition to initiate a retention control =

Condition 1. The vehicle speed V is equal to or smaller than a predetermined vehicle speed V₀.
Condition 2. The drive mode of the vehicle 10 is the four-wheel drive mode.
Condition 3. The accelerator opening A is equal to or smaller than a predetermined opening.
Condition 4. The brake pressure B is equal to or smaller than a predetermined pressure.

When the condition to initiate a retention control is satisfied, the controller 9 calculates an instruction torque that is a target value of the torque to be transmitted to the rear wheels 5 via the coupling 6, and outputs an excitation current corresponding to the instruction torque to the electromagnetic coil 30. The value of the instruction torque is fundamentally set in accordance with the accelerator opening A, the vehicle speed V, the revolution number of the engine, and the like. In contrast, the instruction torque when a retention control is carried out is set to a value greater than an instruction torque when no retention control is carried out. In other words, the value of the instruction torque is set such that the instruction torque after an initiation of a retention control becomes greater than the instruction torque before the initiation of the retention control.

As a result, the urging state of the ball cam structure 8 while the retention control is carried out is raised than that before the initiation of the retention control. Therefore, if a phase difference has arisen between the first cam 25 and the second cam 26 during driving, the phase difference is maintained. Further, the retention control is continued at least while the vehicle 10 stops, and preferably until the vehicle speed V exceeds the predetermined vehicle speed V₀ after the vehicle 10 starts. As a result, the urging state of the ball cam structure 8 during a stoppage until immediately after a start of the vehicle 10 is raised so as to be greater than that before the initiation of the retention control (before the stoppage).

The controller 9 of the present embodiment has a function to vary the value of an instruction torque in a retention control in accordance with the driving state before the vehicle 10 stops. To begin with, as the outer air temperature C of the vehicle 10 reduces, the value of the instruction torque is raised such that driving power to be transmitted from the engine 1 to the rear wheels 5 is increased. In addition, as the absolute value of the road surface gradient D increases, the value of the instruction torque is raised. Furthermore, as the coefficient of friction µ of the road surface on which the vehicle 10 drives reduces, the value of the instruction torque is raised. Those settings allow the phase difference between the first cam 25 and the second cam 26 to be retained further strongly as the road surface becomes further slippery, and the start performance of the vehicle 10 is improved.

The controller 9 also has a function to continue a retention control at least until the vehicle 10 starts when the drive mode of the vehicle 10 is switched from the four-wheel drive mode to the two-wheel drive mode while the retention control is carried out, instead of immediately disconnecting the clutch 7. In other words, even when Condition 2 described above is changed to unsatisfied after a retention control has been initiated (e.g., during a temporary stoppage of the vehicle 10), the retention control that has been already initiated is not discontinued but an output of the excitation current to the electromagnetic coil 30 is continued.

The value of the instruction torque after the retention control ends is set in accordance with the vehicle speed V, the accelerator opening A, the brake pressure B, the longitudinal acceleration G, the steering angle θ, the road surface gradient D, the set position Q of the transfer lever, and the like. As a technique for setting the instruction torque, well-known techniques may be adopted.

### [4. Flowchart]

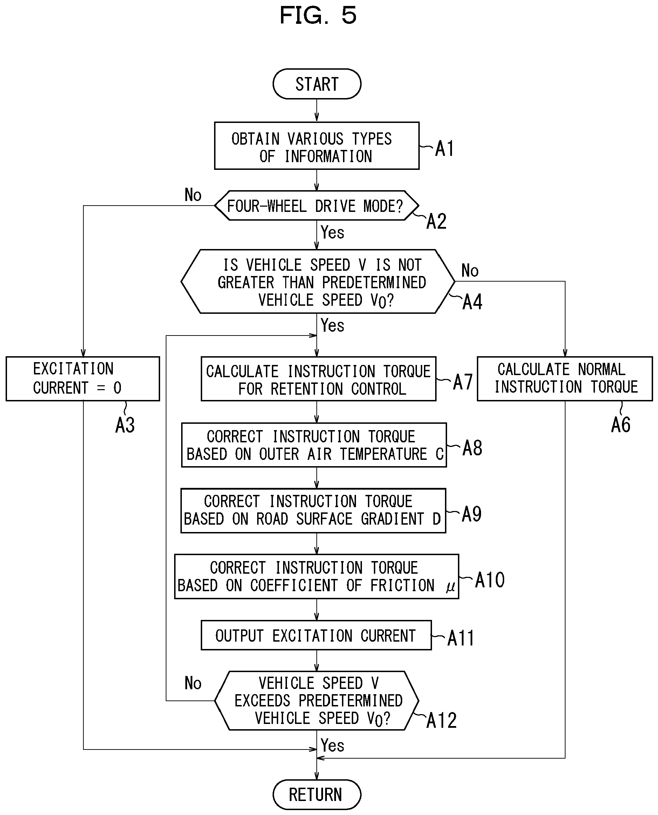

FIG. 5 is a flowchart exemplifying a procedure of a retention control, which is repeatedly executed in the controller 9 in a predetermined computation cycle. In Step A1, various information is input to the controller 9. Here, information about the vehicle speed V, the longitudinal acceleration G, the steering angle θ, the set position P of the shift lever, the accelerator opening A, the brake pressure B, the outer air temperature C, the road surface gradient D, the set position Q of the transfer lever, the coefficient of friction µ, a skid, and the like, is input, for example.

Steps A2 and A4 are steps to determine conditions to initiate a retention control. Here, the conditions to determine Conditions 1 and 2 described above are exemplified. In Step A2, based on information of the set position Q of the transfer lever, a determination is made as to whether or not the drive mode of the vehicle 10 is the four-wheel drive mode. If the drive mode is the two-wheel drive mode in this step, the flow proceeds to Step A3, in which the excitation current of the electromagnetic coil 30 is controlled to zero and the computation in this control cycle ends. Otherwise, if the drive mode is the four-wheel drive mode, the flow proceeds to Step A4.

In Step A4, a determination is made as to whether or not the vehicle speed V is equal to or smaller than the predetermined vehicle speed V₀. If this condition is not satisfied, no retention control is initiated and thus the flow proceeds to Step A6, in which a normal instruction torque is calculated and a normal excitation current corresponding to it is output to the electromagnetic coil 30. Then the computation in this control cycle ends. The normal excitation current has a value that is smaller than the excitation current in the retention control. Otherwise, if the vehicle speed V is equal to or smaller than the predetermined vehicle speed V₀, it is determined that the vehicle 10 is about to stop and the flow proceeds to Step A7, in which a retention control is initiated. This retention control is continued until it is confirmed that the vehicle speed V exceeds the predetermined vehicle speed V₀ in Step A12, and is repeatedly executed in a predetermined computation cycle. The duration of the retention control begins immediately before the vehicle 10 stops and lasts until immediately after vehicle 10 start, including the duration of the stoppage.

In Step A7, an instruction torque is set which has a value greater than the instruction torque before the retention control was initiated (i.e., the instruction torque set in Step A6). In the subsequent Step A8, this value of the instruction torque is corrected so as to be increased as the outer air temperature C drops. In addition, in Step A9, the value of the instruction torque is corrected so as to be increased as the absolute value of the road surface gradient D increases. Furthermore, in Step A10, the value of the instruction torque is corrected so as to be increased as the coefficient of friction µ of road surface reduces.

Thereafter, in Step A11, an excitation current corresponding to the instruction torque is output to the electromagnetic coil 30. As a result, the differential state of the ball cam structure 8 during the stoppage of the vehicle 10 is retained, and the second cam 26 and the input-side clutch plates 23 are kept to contact each other (urging state). Because the connected state of the clutch 7 is retained until the vehicle speed V exceeds the predetermined vehicle speed V₀, the driving power of the engine 1 is transmitted to both the front wheels 4 and the rear wheels 5 immediately after a start and the start performance of the vehicle 10 is improved. Further, because the differential state of the ball cam structure 8 is retained, the clutch 7 is urged to the engagement direction since before a difference in the rotation speeds arises between the front wheels 4 (upstream to the clutch 7) and the rear wheels 5 (downstream to the clutch 7).

### [5. Effects and advantages]

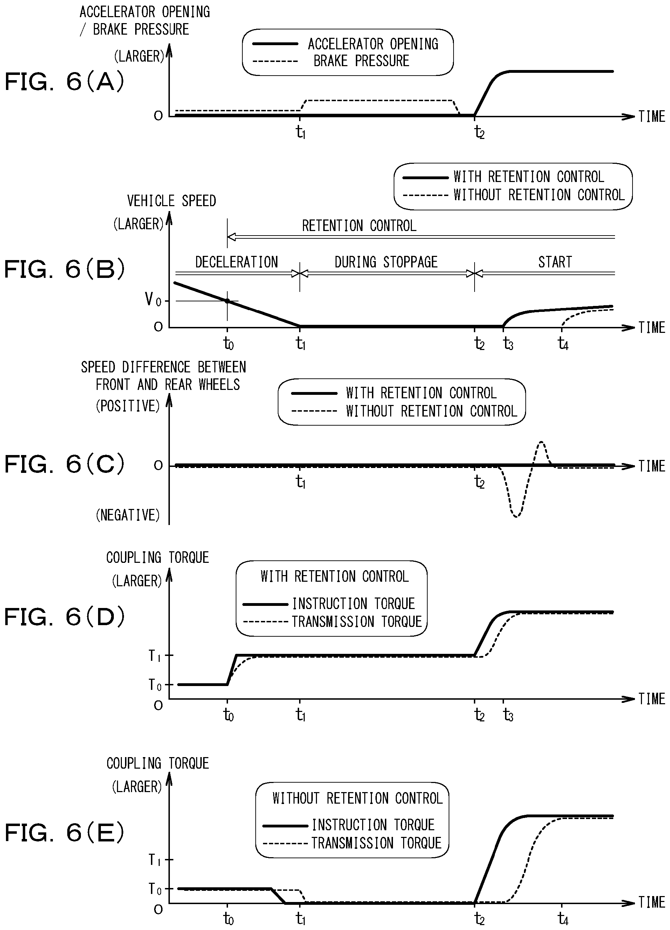

FIGS. 6(A) - 6(D) are graphs for depicting details on the controls of a retention control when the vehicle 10 decelerates while the vehicle 10 drives on an uphill road in the four-wheel drive mode, and FIG. 6(E) is a graph when no retention control is carried out as a comparative example.

When no retention control is carried out, as shown in FIG. 6(E), the instruction torque is set to zero and the excitation current of the electromagnetic coil 30 is cut off immediately before the vehicle 10 stops. Accordingly, because the differential state of the ball cam structure 8 is released during the stoppage of the vehicle 10, the clutch 7 becomes the released state and the transmission torque of the clutch 7 becomes zero. Specifically, when the accelerator pedal is depressed at Time t₂ during the stoppage, no driving power is transmitted to the rear wheels 5 immediately after Time t₂. As shown in FIGS. 6(C) and 6(E), the clutch 7 becomes the coupling state only after the front wheels 4 skid and accordingly the ball cam structure 8 becomes the differential state. Therefore, as shown by the broken line in FIG. 6 (B), the duration from Time t₂ to Time t₄ at which the vehicle speed V begins to increase is extended, and therefore a satisfactory start performance is not achieved.

In contrast, the controller 9 of the present embodiment initiates a retention control when the vehicle speed V drops to the predetermined vehicle speed V₀ or less at Time t₀. Before Time t₀ (before the initiation of the retention control), the instruction torque of the coupling 6 has been set to a relatively small value T₀ (T₀ > 0 [Nm]) if the accelerator opening A is substantially zero. In contrast, the instruction torque after Time t₀ is set to a value T₁ that is greater than the value before Time t₀ (T₁ > T₀). Thereafter, after Time t₁, during a stoppage in which the vehicle speed V becomes zero, the value of the instruction torque T₁ is maintained and the differential state of the ball cam structure 8 is retained.

As shown in FIG. 6 (D), when the accelerator pedal is depressed at Time t₂, the instruction torque is set so as to be raised in accordance with an increase in the accelerator opening A. At this time, because the differential state of the ball cam structure 8 is retained, the transmission torque to the rear wheels 5 are increased immediately after Time t₂. As a result, as shown by the solid line in FIG. 6(B), the duration from Time t₂ to Time t₃ at which the vehicle speed V begins to increase is shortened, and the vehicle 10 starts swiftly.
(1) In the above-described vehicle 10, if the clutch 7 has been urged to the engagement direction before a stoppage, an urging state of the ball cam structure 8 is controlled. For example, when the vehicle 10 driving in the four-wheel drive mode decelerates and is about to stop, the second cam 26 of the ball cam structure 8 and the input-side clutch plates 23 of the clutch 7 are in the urging state in which they contact each other. Thus, a retention control is carried in which this urging state is retained since before the stoppage until a start. Thereby, it is possible to keep the clutch 7 to be urged in the engagement direction with the ball cam structure 8 during the stoppage, and the engaged state of the clutch 7 can be maintained. Therefore, the driving power of the engine 1 can be swiftly transmitted to the rear wheels 5 when the accelerator pedal is depressed, and the start performance of the vehicle 10 can be improved.
(2) With regard to the above-described urging state of the ball cam structure 8, an urging state when a retention control is carried out is raised as compared to an urging state when no retention control is carried out. For example, as shown in FIG. 6(D), the instruction torque of the coupling 6 (the transmission torque of the clutch 7) is controlled so as to be greater than that before the vehicle 10 stops. Thereby, it is possible to suppress slide between the input-side clutch plates 23 and the output-side clutch plates 24, and the coupling state between the input-side clutch plates 23 and the output-side clutch plates 24 becomes less prone to be disengaged during the stoppage. Therefore, an engaged state of the clutch 7 can be maintained in a more reliable manner with a simplified control configuration, and the start performance of the vehicle 10 can be further improved.
(3) In the above-described ball cam structure 8, once an engaged state between the first cam 25 and the second cam 26 is released, no engaged state can be obtained again unless a difference in the rotation speeds arises between the first cam 25 and the second cam 26. In contrast, by carrying out a retention control immediately before the vehicle 10 stops, it is possible to maintain an engaged state between the first cam 25 and the second cam 26 without releasing it. Thereby, it is possible to keep the clutch 7 to be urged in the engagement direction before a start, and the start performance of the vehicle 10 can be improved.
   In addition, in the above-described retention control, if a phase difference has arisen between the first cam 25 and the second cam 26 before the vehicle 10 stops, the phase difference is maintained during the stoppage. As set forth above, it is possible to suppress a slide of the ball cam structure 8 upon a start by maintaining the phase difference during a stoppage, and an engaged state of the clutch 7 can be maintained in a more reliable manner. Therefore, the start performance of the vehicle 10 can be improved.
(4) In the above-described retention control, the instruction torque is set to a larger value to raise an urging state to the clutch 7 by the ball cam structure 8 as the outer air temperature C drops. Thereby, it is possible to efficiently suppress a skid during a start in a cold environment, and the start performance of the vehicle 10 can be improved.
(5) Furthermore, the instruction torque is set to a larger value to raise an urging state to the clutch 7 by the ball cam structure 8 as the coefficient of friction µ of road surface reduces. In other words, the ball cam structure 8 is controlled such that the driving power is transmitted to the rear wheels 5 in a more reliable manner as tires become more prone to skid. Thereby, it is possible to efficiently suppress a slide of the clutch 7 during a start, and the start performance of the vehicle 10 can be improved.
(6) Similarly, the instruction torque is set to a larger value to raise an urging state to the clutch 7 by the ball cam structure 8 as the absolute value of the road surface gradient D increases. Thereby, it is possible to efficiently suppress a slide of the clutch 7 upon a start on an uphill road or a downhill road, and the start performance of the vehicle 10 can be improved.
(7) Even when the drive mode is switched from the four-wheel drive mode to the two-wheel drive mode during a stoppage, the above-described retention control is not immediately discontinued but is maintained until the vehicle 10 starts. Thereby, it is possible to efficiently suppress a slide of the clutch 7 during a start, and the start performance of the vehicle 10 can be improved.

### [6. Modification]

While the above-described embodiment has been described using an example in which the vehicle 10 having the engine 1 as a power source as, types of power sources are not limited to this example. For example, a motor or a motor/generator which operates with electric power from an in-vehicle battery may be used as a power source. Alternatively, the disclosure may be applied to a hybrid automobile having both an engine 1 and a motor as power sources.

In addition, while the above-described embodiment has been described using an example in which the coupling 6 contains the wet clutch 7 and the ball cam structure 8, any types of the clutch 7 may be used and a claw clutch or a dry friction clutch may be applied. Similarly, any structures may be applied as an urging device for urging the clutch 7 in the engagement direction, and a roller cam structure containing a cylindrical roller member may be applied, in place of the ball-shaped ball members 27, for example.

In addition, in the above-described embodiment, a phase difference between the first cam 25 and the second cam 26 is maintained and an urging state of the clutch 7 by the ball cam structure 8 is maintained by controlling the excitation current of the electromagnetic coil 30. Concrete configurations for controlling an urging state of the clutch 7, however, are not limited to this example. For example, a member may be provided which presses the second cam 26 in the direction such that the second cam 26 is separated from the first cam 25, and a structure that increases or reduces the pressing by that member in accordance with the magnitude of a current of an electromagnetic coil may be used. By at least maintaining an urging state by an urging device since before a stoppage in accordance with the transmission state of driving power of the clutch 7, effects similar to those in the above-described embodiment can be achieved.

In addition, while the vehicle 10 in which the rear wheels 5 are connected to the engine 1 via the coupling 6 has been exemplified in the above-described embodiment, the relationship between the front wheels 4 and the rear wheels 5 may be reversed. Specifically, the rear wheels 5 may be connected to the engine 1 bypassing the coupling 6, whereas the front wheels 4 may be disconnectably connected to the engine 1 via the coupling 6.

### Descriptions of Reference Symbols

1 ENGINE (POWER SOURCE)
4 FRONT WHEELS (FIRST DRIVE WHEELS)
5 REAR WHEELS (SECOND DRIVE WHEELS)
6 COUPLING
7 CLUTCH
8 BALL CAM STRUCTURE (URGING DEVICE)
9 CONTROLLER (CONTROLLING DEVICE)
10 VEHICLE
17 OUTER AIR TEMPERATURE SENSOR (OUTER AIR TEMPERATURE DETECTING DEVICE)
18 ROAD SURFACE GRADIENT SENSOR (ROAD SURFACE GRADIENT DETECTING DEVICE)
20 ELECTRIC CONTROL APPARATUS (COEFFICIENT OF FRICTION OBTAINING DEVICE)
25 FIRST CAM
26 SECOND CAM
27 BALL MEMBER
28 CONTROL CLUTCH
29 ARMATURE
30 ELECTROMAGNETIC COIL

## Claims

1. A control apparatus for a vehicle comprising: a power source (1) of the vehicle, first drive wheels (4) that are connected to the power source (1), and that are to be driven by the power source (1) ;, a clutch (7) interposed on a transmission path of driving power generated by the power source (1), and second drive wheels (5) that are connected to the power source (1) via the clutch (7), and that are capable of being driven by the power source (1), the control apparatus for the vehicle comprising:
a transfer (3) that transfers the driving power generated by the power source (1) to the second drive wheels (5) in accordance with a drive mode;
an urging device (8) that is interposed on the transmission path connecting between the transfer (3) and the second drive wheels (5), and urges the clutch (7) to an engagement direction in accordance to a difference between a rotation speed upstream to the clutch (7) and a rotation speed downstream to the clutch (7); and **characterised in that** it further comprises
a controlling device (9) that maintains, when the clutch (7) has been urged to the engagement direction by the urging device (8) before the vehicle stops, an urging state by the urging device (8) during the stoppage, since before the stoppage.

2. The control apparatus for the vehicle according to claim 1, wherein the controlling device (9) intensifies the urging state by the urging device (8) during the stoppage so as to be greater than the urging state by the urging device (8) before the stoppage.

3. The control apparatus for the vehicle according to claim 1 or 2, wherein the urging device (8) has a ball cam structure comprising:
a first cam (25) to which the driving power is input;
a second cam (26) that is disposed opposing to the first cam (25), having a ball (27) interposed therebetween, to press the clutch (7) to an engagement direction in accordance with a phase difference with the first cam (25); and
a control clutch (28) that fixes the first cam (25) on an upstream of the clutch (7) on the transmission path.

4. The control apparatus for the vehicle according to any of claims 1 to 3, comprising an outer air temperature detecting device (17) that detects an outer air temperature of the vehicle,
wherein the controlling device (9) controls the urging state by the urging device (8) during the stoppage to raise a ratio of a driving power to be transmitted from the power source (1) to the second drive wheels (5) as the outer air temperature detected by the outer air temperature detecting device (17) decreases.

5. The control apparatus for the vehicle according to any of claims 1 to 4, comprising a coefficient of friction obtaining device (20) that obtains a coefficient of friction of a road surface on which the vehicle drives,
wherein the controlling device (9) controls the urging state by the urging device (8) during the stoppage to raise the ratio of the driving power to be transmitted from the power source (1) to the second drive wheels (5) as the coefficient of friction obtained by the coefficient of friction obtaining device (20) decreases.

6. The control apparatus for the vehicle according to any of claims 1 to 5, comprising a road surface gradient detecting device (18) that detects a gradient of a road surface on which the vehicle drives,
wherein the controlling device (9) controls the urging state by the urging device (8) during the stoppage to raise the ratio of the driving power to be transmitted from the power source (1) to the second drive wheels (5) as an absolute value of the gradient detected by the road surface gradient detecting device (18) increases.

7. The control apparatus for the vehicle according to any of claims 1 to 6, comprising a mode switching device that switches the drive mode of the vehicle between a two-wheel drive mode in which the vehicle is driven only with the first drive wheels (4), and a four-wheel drive mode in which the vehicle is driven with both the first drive wheels (4) and the second drive wheels (5),
wherein the controlling device (9) maintains, when the drive mode of the vehicle is switched from the four-wheel drive mode to the two-wheel drive mode during the stoppage, the urging state by the urging device (8) until the vehicle starts.

## Patentansprüche

1. Steuerungseinrichtung für ein Fahrzeug, umfassend: eine Leistungsquelle (1) des Fahrzeugs, erste Antriebsräder (4), die mit der Leistungsquelle (1) verbunden sind, und die von der Leistungsquelle (1) anzutreiben sind; eine Kupplung (7), die auf einem Übertragungsweg von durch die Leistungsquelle (1) erzeugter Antriebsleistung zwischengesetzt ist, und zweite Antriebsräder (5), die über die Kupplung (7) mit der Leistungsquelle (1) verbunden sind, und die in der Lage sind, durch die Leistungsquelle (1) angetrieben zu werden, wobei die Steuerungseinrichtung für das Fahrzeug Folgendes umfasst:
einen Transfer (3), der die von der Leistungsquelle (1) erzeugte Antriebsleistung entsprechend einem Antriebsmodus auf die zweiten Antriebsräder (5) transferiert;
eine Forcierungsvorrichtung (8), die auf dem Übertragungsweg, die zwischen dem Transfer (3) und den zweiten Antriebsrädern (5) verbindet, zwischengesetzt ist, und die Kupplung (7) entsprechend einer Differenz zwischen einer Drehzahl stromaufwärts der Kupplung (7) und einer Drehzahl stromabwärts der Kupplung (7) in eine Eingriffsrichtung forciert;
und **dadurch gekennzeichnet, dass** sie weiter umfasst eine Steuervorrichtung (9), die, wenn die Kupplung (7) durch die Forcierungsvorrichtung (8) in die Eingriffsrichtung forciert worden ist, bevor das Fahrzeug anhält, einen Forcierungszustand durch die Forcierungsvorrichtung (8) während des Anhaltens bereits vor dem Anhalten aufrechterhält.

2. Steuerungseinrichtung für das Fahrzeug nach Anspruch 1, wobei die Steuervorrichtung (9) den Forcierungszustand durch die Forcierungsvorrichtung (8) während des Anhaltens intensiviert, um größer als der Forcierungszustand durch die Forcierungsvorrichtung (8) vor dem Anhalten zu sein.

3. Steuerungseinrichtung für das Fahrzeug nach Anspruch 1 oder 2, wobei die Forcierungsvorrichtung (8) eine Kugelnockenstruktur aufweist, Folgendes umfassend:
einen ersten Nocken (25), in den die Antriebsleistung eingebracht wird;
einen zweiten Nocken (26), der entgegengesetzt zum ersten Nocken (25) angeordnet ist, der eine Kugel (27) aufweist, die dazwischen eingesetzt ist, um die Kupplung (7) entsprechend einer Phasendifferenz mit dem ersten Nocken (25) in eine Eingriffsrichtung zu drücken; und
eine Steuerungskupplung (28), die den ersten Nocken (25) stromaufwärts der Kupplung (7) auf dem Übertragungsweg fixiert.

4. Steuerungseinrichtung für das Fahrzeug nach einem der Ansprüche 1 bis 3, eine Vorrichtung (17) zum Detektieren der Außenlufttemperatur umfassend, die eine Außenlufttemperatur des Fahrzeugs detektiert,
wobei die Steuervorrichtung (9) den Forcierungszustand durch die Forcierungsvorrichtung (8) während des Anhaltens steuert, um ein Verhältnis einer Antriebsleistung, die von der Leistungsquelle (1) zu den zweiten Antriebsrändern (5) zu übertragen ist, zu erhöhen, wenn die von der Vorrichtung (17) zum Detektieren der Außenlufttemperatur detektierte Außenlufttemperatur abnimmt.

5. Steuerungseinrichtung für das Fahrzeug nach einem der Ansprüche 1 bis 4, eine Vorrichtung (20) zum Erhalten eines Reibungskoeffizienten umfassend, die einen Reibungskoeffizienten einer Straßenoberfläche erhält, auf der das Fahrzeug fährt,
wobei die Steuervorrichtung (9) den Forcierungszustand durch die Forcierungsvorrichtung (8) während des Anhaltens steuert, um das Verhältnis der Antriebsleistung, die von der Leistungsquelle (1) zu den zweiten Antriebsrändern (5) zu übertragen ist, zu erhöhen, wenn der von der Vorrichtung (20) zum Erhalten eines Reibungskoeffizienten erhaltene Reibungskoeffizient abnimmt.

6. Steuerungseinrichtung für das Fahrzeug nach einem der Ansprüche 1 bis 5, eine Vorrichtung (18) zum Detektieren eines Straßenoberflächengradienten umfassend, die einen Gradienten einer Straßenoberfläche detektiert, auf der das Fahrzeug fährt,
wobei die Steuervorrichtung (9) den Forcierungszustand durch die Forcierungsvorrichtung (8) während des Anhaltens steuert, um das Verhältnis der Antriebsleistung, die von der Leistungsquelle (1) zu den zweiten Antriebsrändern (5) zu übertragen ist, zu erhöhen, wenn ein absoluter Wert des von der Vorrichtung (18) zum Detektieren eines Straßenoberflächengradienten detektierten Gradienten ansteigt.

7. Steuerungseinrichtung für ein Fahrzeug nach einem der Ansprüche 1 bis 6, eine Modus-Umschaltvorrichtung umfassend, die den Antriebsmodus des Fahrzeugs zwischen einem Zweirad-Antriebsmodus, bei dem das Fahrzeug nur mit den ersten Antriebsrädern (4) angetrieben wird, und einem Vierrad-Antriebsmodus umschaltet, bei dem das Fahrzeug mit beiden, den ersten Antriebsrädern (4) und den zweiten Antriebsrädern (5) angetrieben wird,
wobei die Steuervorrichtung (9), wenn der Antriebsmodus des Fahrzeugs, während des Anhaltens, von dem Vierrad-Antriebsmodus auf den Zweirad-Antriebsmodus umgeschaltet wird, den Forcierungszustand durch die Forcierungsvorrichtung (8) aufrechterhält, bis das Fahrzeug startet.

## Revendications

1. Appareil de commande pour un véhicule comprenant : une source de puissance (1) du véhicule, des premières roues motrices (4) qui sont reliées à la source de puissance (1), et qui doivent être entraînées par la source de puissance (1) ; un embrayage (7) interposé sur un trajet de transmission d'une puissance d'entraînement générée par la source de puissance (1), et des secondes roues motrices (5) qui sont reliées à la source de puissance (1) via l'embrayage (7), et qui sont capables d'être entraînées par la source de puissance (1), l'appareil de commande pour le véhicule comprenant :
un transfert (3) qui transfère la puissance d'entraînement générée par la source de puissance (1) aux secondes roues motrices (5) en conformité avec un mode d'entraînement ;
un dispositif de sollicitation (8) qui est interposé sur le trajet de transmission reliant le transfert (3) et les secondes roues motrices (5), et sollicite l'embrayage (7) vers une direction d'engagement en conformité avec une différence entre une vitesse de rotation en amont de l'embrayage (7) et une vitesse de rotation en aval de l'embrayage (7) ; et **caractérisé en ce qu'**il comprend en outre
un dispositif de commande (9) qui maintient, lorsque l'embrayage (7) a été sollicité vers la direction d'engagement par le dispositif de sollicitation (8) avant l'arrêt du véhicule, un état de sollicitation par le dispositif de sollicitation (8) pendant l'arrêt, depuis avant l'arrêt.

2. Appareil de commande pour le véhicule selon la revendication 1, dans lequel le dispositif de commande (9) intensifie l'état de sollicitation par le dispositif de sollicitation (8) pendant l'arrêt de façon à ce qu'il soit plus grand que l'état de sollicitation par le dispositif de sollicitation (8) avant l'arrêt.

3. Appareil de commande pour le véhicule selon la revendication 1 ou 2, dans lequel le dispositif de sollicitation (8) a une structure de bille et came comprenant :
une première came (25) à laquelle la puissance d'entraînement est fournie en entrée ;
une seconde came (26) qui est disposée à l'opposé de la première came (25), ayant une bille (27) interposée entre elles, pour pousser l'embrayage (7) vers une direction d'engagement en conformité avec une différence de phase avec la première came (25) ; et
un embrayage de commande (28) qui fixe la première came (25) sur un amont de l'embrayage (7) sur le trajet de transmission.

4. Appareil de commande pour le véhicule selon l'une quelconque des revendications 1 à 3, comprenant un dispositif de détection de température d'air extérieur (17) qui détecte une température d'air extérieur du véhicule,
dans lequel le dispositif de commande (9) commande l'état de sollicitation par le dispositif de sollicitation (8) pendant l'arrêt pour élever un rapport d'une puissance d'entraînement à transmettre de la source de puissance (1) aux secondes roues motrices (5) à mesure que la température d'air extérieur détectée par le dispositif de détection de température d'air extérieur (17) diminue.

5. Appareil de commande pour le véhicule selon l'une quelconque des revendications 1 à 4, comprenant un dispositif d'obtention de coefficient de frottement (20) qui obtient un coefficient de frottement d'une surface de route sur laquelle le véhicule est entraîné,
dans lequel le dispositif de commande (9) commande l'état de sollicitation par le dispositif de sollicitation (8) pendant l'arrêt pour élever le rapport de la puissance d'entraînement à transmettre de la source de puissance (1) aux secondes roues motrices (5) à mesure que le coefficient de frottement obtenu par le dispositif d'obtention de coefficient de frottement (20) diminue.

6. Appareil de commande pour le véhicule selon l'une quelconque des revendications 1 à 5, comprenant un dispositif de détection de déclivité de surface de route (18) qui détecte une déclivité d'une surface de route sur laquelle le véhicule est entraîné,
dans lequel le dispositif de commande (9) commande l'état de sollicitation par le dispositif de sollicitation (8) pendant l'arrêt pour élever le rapport de la puissance d'entraînement à transmettre de la source de puissance (1) aux secondes roues motrices (5) à mesure qu'une valeur absolue de la déclivité détectée par le dispositif de détection de déclivité de surface de route (18) augmente.

7. Appareil de commande pour le véhicule selon l'une quelconque des revendications 1 à 6, comprenant un dispositif de commutation de mode qui commute le mode d'entraînement du véhicule entre un mode d'entraînement à deux roues dans lequel le véhicule est entraîné uniquement avec les premières roues motrices (4), et un mode d'entraînement à quatre roues dans lequel le véhicule est entraîné avec à la fois les premières roues motrices (4) et les secondes roues motrices (5),
dans lequel le dispositif de commande (9) maintient, lorsque le mode d'entraînement du véhicule est commuté du mode d'entraînement à quatre roues au mode d'entraînement à deux roues pendant l'arrêt, l'état de sollicitation par le dispositif de sollicitation (8) jusqu'au démarrage du véhicule.
